# EUROPÄISCHE PATENTANMELDUNG

(11) **EP 0 615 389 A2**
(43) Veröffentlichungstag der Anmeldung: **14.09.1994**
(21) Anmeldenummer: 94102952.2
(22) Anmeldetag: 28.02.1994
(51) Int. Cl.: H04N 9/79, H04N 5/782, H04N 9/82

(54) **Videorecorder mit Aufzeichnung und Wiedergabe von Audiosignalen**

(30) Priorität: 09.03.1993 DE 4307358
(71) Anmelder: NOKIA TECHNOLOGY GmbH, D-75175 Pforzheim (DE)
(72) Erfinder: Durst, Klaus, D-76646 Bruchsal (DE)

(57) **Zusammenfassung**

2.1. Zum Verbessern der Audiosignalübertragung werden bei Heim-Videorecordern, in den Schrägspuren neben dem Videosignal zusätzlich Audiosignale nach dem HiFi-Tiefenmultiplex-Verfahren aufgezeichnet bzw. abgetastet.
Zusätzliche rotierende Köpfe zeichnen das Audiosignal in die Tiefe der Magnetschicht und die Videoköpfe beschreiben das Band mit dem Videosignal an der Oberfläche.
Die Erfindung ermöglicht es, auf diese zusätzlichen Köpfe nebst elektronischen und mechanischem Zubehör zu verzichten, verbessert das Übersprechverhalten, verhindert Kopfwechselprobleme und gewährleistet die volle Kompatibilität zum bestehenden System.

2.2. Dieses wird ermöglicht, indem den Videoköpfen während der horizontalen Austastung zusätzlich zum FM-BAS-Signal und umgesetzten Farbartsinal mindestens ein Audioträgersignal, das diskontinuierlich mit Abtastwerten von den Audiosignalen moduliert ist, zugeführt wird.

2.3. Der Videorecorder ermöglicht, bei Heim-Videorecordern insbesondere auch bei reduzierter Bandlaufgeschwindigkeit HiFi-Stereo-Betrieb.

## Beschreibung

Die Erfindung betrifft einen Videorecorder mit verbesserter Aufzeichnung und Wiedergabe von Audiosignalen insbesondere einen Heim-Videorecorder, bei dem in den Schrägspuren Video- und Audiosignale aufgezeichnet bzw. abgetastet werden.

Herkömmliche Heim-Videorecorder zeichnen bekanntlich das Videosignal im Schrägspurverfahren mit Hilfe von rotierenden Video-Magnetköpfen auf.
Im Gegensatz dazu, wird das Mono-Audiosignal zur Videodarbietung auf einer Längsspur am Bandrand mit einem gesonderten Audiokopf aufgezeichnet.

Von Nachteil ist, daß beim Heim-Videorecorder der Bandvorschub im normalen Betrieb etwa nur halb so groß und beim Betrieb mit halber bzw. bei 1/3 Bandgeschwindigkeit (Longplay bzw. Extended Mode) erheblich kleiner als bei der Compactcassette ist. Dieses beeinflußt nachteilig die Qualität der Audiosignalverarbeitung.
Das betrifft insbesondere Betriebsarten mit verlängerter Bandlaufzeit wie z.B. mit dreifacher Spielzeit. Insbesondere treten Probleme bezüglich der oberen Grenzfrequenz, des Störabstandes, des Gleichlaufs, der Arbeitspunktanpassung an das Bandmaterial auf.

Diese sind mittels qualitativer Verbesserungen von Band- und Kopfmaterial nicht hinreichend zu beherrschen.

Darüberhinaus wurden auch schon Geräte angeboten, bei denen die Signalkomponenten eines Stereosignals in einer geteilten Längsspur übertragen wurden. Mit dieser Lösung konnte jedoch keine zufriedenstellende Qualität erreicht werden. Deshalb wird sie heute nicht mehr realisiert.

Es sind zahlreiche Lösungen bekannt, die darauf abzielen, die Audioeigenschaften von Videorecordern dadurch zu verbessern, daß die Audiosignale zusätzlich zur Längsspur in den Schrägspuren der Videoaufzeichnung untergebracht werden.

So ist beispielsweise aus der DE-PS 31 53 617 ein Videorecorder mit verbesserter Aufzeichnung von Tonsignalen bekannt, bei dem den rotierenden Videoköpfen zusätzlich zu den üblichen Farbart- und FM-BAS-Signalen die auf gesonderten Trägern befindlichen und Audiosignale einer Videodarbietung über eine Addierstufe zur Aufzeichnung zugeführt werden.
Die Audiosignale befinden sich als Frequenzmodulation auf je einem Träger im unteren Seitenband des frequenzmodulierten BAS-Signals.
Diese Bereiche müssen im Spektrum des Bildträgersignals durch zwei Notch-Filter unterdrückt werden.
Zur besseren Signaltrennung zwischen den Audio- und Videoträgersignalen werden die Audio-Trägerfrequenzen in die Nähe des Maximums der Kopf/Band-Kennlinie gelegt. In diesem Frequenzbereich kann mit kleinen Amplituden der Audio-Trägersignale gearbeitet werden und das Luminanzsignal tritt dort selten auf.

Videorecorder dieser Art haben den Nachteil, daß mit den o.g. Maßnahmen keine hinreichende Übersprechdämpfung zwischen den Video- und Audiosignalen erzielbar ist.
Zum Vermeiden von Bildstörungen bei der Wiedergabe durch die im Luminanzband angesiedelten Audioträger sind weitere elektronische Maßnahmen insbesondere Filterung erforderlich. Dennoch sind zeitweilige Bildstörungen durch Audiosignale und Kompromisse bei Bild- und Tonqualität unumgänglich. Wird ein Videoband mit einer derartigen zusätzlichen Audiosignalaufzeichnung auf herkömmlichen Videorecordern, die über keine entsprechenden zusätzlichen Selektionsmittel verfügen, abgespielt, so kommt es zwangsläufig zu Störungen in der Bildwiedergabe.

Aus der DE-Z: Funkschau, 1985, Heft 7, Seiten 45 - 48 ist ein HiFi-Tiefenmultiplex-Verfahren zum Aufzeichnen und Wiedergeben von Audiosignalen in den Schrägspuren bekannt. Dieses ermöglicht zur besseren Signaltrennung Doppelschichtaufzeichnungen auf Videobändern.
Zwei zusätzliche, rotierenden Audioköpfe mit größerer Spaltbreite, die den zugehörenden Videoköpfen voraus eilen, zeichnen im Wechsel analog zur bekannten Videoaufzeichnung zunächst zwei modulierte Träger mit je einem Stereoseitensignal in die Tiefe der Magnetschicht. Anschließend wird darüber in der selben Spur von den Videoköpfen mit engerem Kopfspalt die Videoaufzeichnung gelegt.
Die zwei Audioträger (f1= 1,4 MHz und f2= 1,8 MHz) liegen immer gemeinsam unter den Videospuren.
Die Audioköpfe werden im Azimutwinkel (+ 30° bzw - 30°) zueinander stärker versetzt angeordnet als die Videoköpfe. Damit werden die Störabstände verbessert. Zu diesem Zweck wird auch die Audiospur schmaler als die Videospur aufgezeichnet.

Von Nachteil ist, daß dieses Verfahren im Videokopfrad selbst zum Aufzeichnen von Monosignalen zwei zusätzliche Audioköpfe nebst zusätzlicher Aufsprech- und Wiedergabeverstärker sowie einen großen mechanischen und elektronischen Aufwand für die Signalzuführung zu den Köpfen und der Kopfumschaltung erfordert.
Desweiteren treten Kopfwechselprobleme auf. Mit jedem Spurwechsel (50 Hz) entstehen durch Phasensprünge periodisch Störsignale, Signallücken und Signalverzerrungen im Audiosignalbereich. Im Gegensatz zu denen, die an den Videoköpfen entstehen, sind diese spürbar. Sie müssen deshalb mit hohem Aufwand beseitigt bzw. korrigiert werden.

Mit den o.g. Maßnahmen allein ist noch keine hinreichende Übersprechdämpfung zwischen den Video- und Audiosignalen erzielbar, da beim Aufzeichnen des Videosignals die darunterliegende Audioaufzeichnung vom Streufeld der Videoköpfe beeinflußt werden kann.
Bei Wiedergabe induzieren die übereinaderliegenden Aufzeichnungen jeweils Störspannungen von anderen Trägersignalen in den Köpfen.
Alle diese Störungen müssen aufnahme- und wiedergabeseitig mit elektronischen Maßnahmen gemindert bzw. beseitigt werden. So werden die Audiosignale vor der Demodulation komprimiert, begrenzt und frequenzverzerrt, um wenig Modulationsbandbreite im Seitenband des modulierten Bildträgersignals zu beanspruchen. Abweichend von den herkömmlichen Recordern, kann der Pegel des Videosignal nicht mehr bis in den Sättigungsbereich des Bandmaterials ausgesteuert werden.

Deshalb können auch bei diesem Verfahren Bildmängel auftreten, insbesondere dann, wenn die Frequenzen der modulierten Signale auf Grund des momentanen Bild- und Toninhaltes zueinander im ungünstigen Verhältnis stehen.

Die vorgenannten Probleme vergrößern sich bei Videorecordern für Betriebsarten mit reduzierter Bandgeschwindigkeit, da bei diesen zum Anpassen der Spurbreite für jede Bandgeschwindigkeit gesonderte Videokopfpaare vorgesehen werden. Für beide Geschwindigkeiten wird jedoch das selbe Audiokopfpaar verwendet. Deshalb wird bezüglich der Audiospurbreite ein Kompromiß gewählt.

Weiterhin ist aus der DE-Z.: Funkschau, 1990, Heft 6, Seiten 72 - 73 ist ein HiFi-Tiefenmultiplex-Verfahren zum digitalen Aufzeichnen und Wiedergeben von Audiosignalen in den Videospuren bekannt.
Bei diesem wird das Stereosignal mit einer Tastfrequenz von 48 kHz abgetaste und die Abtastwerte mit je 16 Bit quantisiert. Zum Aufzeichnen auf Magnetband wird eine Quadratur-Phasenumtastung mit einem Träger von 3 MHz genutzt.

Von Nachteil ist, daß sich für diese Art von digitaler Aufzeichnung nur das Super-VHS-Verfahren eignet und ebenfalls zusätzlich rotierende Audioköpfe nebst Aufsprech- und Wiedergabeverstärker und einen hohen Aufwand zur Kopfumschaltung und Signalzuführung benötigt werden.

Der Erfindung liegt die Aufgabe zu Grunde, einen Videorecorder nach dem Oberbegriff des Anspruchs 1 so auszugestalten:
- daß unabhängig von der Bandlaufgeschwindigkeit, insbesondere bei verringerter Bandlaufgeschwindigkeit, Audiosignale mit verbesserter, hoher Qualität übertragen werden können
- daß gegenüber dem Stand der Technik mit einfacheren Mitteln gegenseitige Beeinflussungen der Trägersignale und Störungen vermieden werden und
- daß die Aufzeichnungen mängelfrei auf herkömmlichen Heim-Videorecordern wiedergeben werden können.

Die Aufgabe wird dadurch gelöst, daß der Videorecorder folgende Merkmale aufweist:
1. Die Audio- und die Videosignale werden gemeinsam von rotierenden Videoköpfen aufgezeichnet und abgetastet. Dazu dient ein Summensignal, das durch lineares Überlagern an einem Summenpunkt entsteht.
2. Das Summensignal besteht aus:
   - einem mit dem Bild-, Austast-, und Synchron-Signal (BAS-Signal) frequenquenzmodulierten Bildträgersignal
   - einem Farbartsignal, welches spektral unterhalb des modulierten Bildträgersignals liegt und
   - mindestens einem modulierten Audioträgersignal, dessen Frequenzbereich sich außerhalb des Hubbereichs des modulierten Bildträgersignals befindet.
3. Das Audioträgersignal wird diskontinuierlich nur während der Dauer von Zeitfenstern, die jeweils innerhalb der horizontalen Austastung liegen, mit Abtastwerten von mindestens einem Audiosignal moduliert.

Im Wiedergabebetrieb sind Einrichtungen zum:
- Selektieren des modulierten Audioträgersignal aus dem Summensignal
- zeit-selektiven Demodulieren der Schwingungspakete während der Zeitfenster
- Halten der demodulierten Abtastwerte
- Umwandeln der Abtastwerte in eine Treppenspannung und
- Reproduzieren der ursprünglichen Audiosignale aus der Treppenspannung
vorhanden.

Die Erfindung nutzt die Erkenntnis, daß im Signalteil von Heim-Videorecordern während der horizontalen Austastung nur wenig Information übertragen wird.
Im Gegensatz zu dem Zeitbereich, in dem Zeileninhalt vorliegt, weist das Video-Signalspektrum im Bereich von Synchronimpuls und Schwarzschulter eine geringe Signalenergie und nur wenige, genau definierte Signalfrequenzen auf. Das Bildträgersignal enthält zu dieser Zeit kein Luminanzsignal und der Farbburst ist nach der Umsetzung des Farbartsinals ebenfalls nicht mehr vorhanden.
Damit sind praktisch während der horizontalen Austastung nur die Frequenzen im Signalspektrum enthalten, die die Werte von Schwarzschulter und Synchronisation kennzeichnen.

Erfindungsgemäß wird in diesen Zeitbereich, in dem das Videosignal diesen determinierte Signalzustand einnimmt, jeweils ein Zeitfenster gelegt, um mindestens ein Audioträgersignal, dem diskontinuierlich die Audioinformation aufmoduliert ist, gemeinsam mit dem Videosignal über die Videoköpfe zu übertragen.
Dieses geschieht, indem mittels bekannter Abtast- und Halteschaltungen die jeweiligen Amplitudenwerte jedes Audiosignals zur definierten Zeit innerhalb der Dauer einer Zeilenlänge ermittelt werden.

Vorteilhaft wird jedes Audiosignal beim Aufzeichnen während der Dauer einer Zeile mindestens einmal abgetastet. Gemäß Abtasttheorem können mit der üblichen Zeilenfrequenz jedoch nur Audiosignale bis zu einer Grenzfrequenz von 7 kHz übertragen werden. Deshalb wird vorteilhaft als Tastfrequenz ein Vielfaches der Zeilenfrequenz genutzt.

Nach einer besonderen Ausführungsform der Erfindung werden innerhalb eines jeden Zeitfensters von den Signalkomponenten eines Stereosignals mehrere Abtastwerte übertragen, die im vorangegangenen Zeitbereich, in dem der Bildinhalt liegt, zu verschiedenen Zeitpunkten den Signalkomponenten entnommen wurden.
D. h., die Abtastwerte werden funktionsbedingt zumindest teilweise vor der horizontalen Austastung gewonnen.
Dafür sind für jedes Audiosignal parallelgeschaltete Abtast- und Halteeinrichtungen vorhanden. Diese Einrichtungen tasten innerhalb einer Zeilendauer diese Audiosignale im Takt der Tastfrequenz periodisch ab und speichern die Abtastwerte, so daß alle Werte bis spätestens zum Beginn des letzten Schwingungspaketes innerhalb eines jeden Zeitfensters vorliegen. Diese Werte dienen im Zeitfenster als Steuergröße zum Modulieren des Audioträgers.
Da die Signalaufbereitung bei Aufnahme und Wiedergabe diskontinuierlich erfolgt, wird das horizontale Austast- und Synchronsignal zum Synchronisieren benutzt.
Deshalb wird vorteilhaft die Abtastpulsfrequenz für die Audiosignale und die Tastsignale für die Einrichtungen zur Signalaufbereitung beim Aufzeichnen und Wiedergeben frequenz- und phasenstarr mit dem horizontalen Austast- und Synchronsignal verknüpft.

Das Modulieren kann im reinen Zeitmultiplex-Betrieb vorgenommen werden, wobei ein Multiplex-Schalter dem Signaleingang eines Modulators innerhalb eines Zeitfensters seriell die Abtastwerte aller Audiosignale zugeführt.

Die maximale Dauer des Zeitfensters, das kleiner oder gleich der horizontalen Austastung sein kann, wird durch den Beginn der vorderen und dem Ende der hinteren Schwarzschulter des Austast- und Synchronsignals begrenzt.

Als Modulator wird vorteilhalft eine Digitalbaugruppe verwendet, die ohne größeres Einschwingen innerhalb des Zeitfensters (etwa 12 µs) ein hochfrequentes Trägersignal erzeugt, das aus einem oder mehreren zeitlich unmittelbar aufeinanderfolgenden Schwingungspaketen besteht, deren Pulsfrequenz, Pulsphase, Pulslänge, Pulsdichte, oder eine andere Größe den zugehörigen Abtastwerten entspricht.

Das Audioträgersignal wird in einem sicheren Abstand außerhalb des Hubbereichs des modulierten Bildträgersignals gelegt.
Dieser enthält z. Z. der horizontalen Austastung im Prinzip nur die zwei Festfrequenzen, die den Schwarzwert (etwa 4 MHz) und den Horizontalsynchronimpuls (3,8 MHz) kennzeichnen sowie deren Übergangsfrequenzen, die durch die endlichen Impulsanstiegszeiten verursacht werden.
Somit stehen gegenüber bekannten Lösungen für die Wahl der Lage des Audioträgersignals innerhalb des Summensignals weit aus mehr Möglichkeiten zur Verfügung. Es kann problemlos ein Frequenzbereich gewählt werden, in dem selbst bei herkömmlichen Videorecordern ohne besondere Selektionsmittel für modulierte Audioträgersignale keine Beeinflussung des Videosignals möglich ist.
Die Nutzung der Pulsphasen- bzw. Pulslängenmodulation bringt durch ihr geringeres, genau definiertes Zusatzspektrum den zusätzlichen Vorteil, daß durch entsprechende Wahl der Abstände der Trägerfrequenzen, die Kollisionsmöglichkeiten der modulierten Signale untereinander weiter verringert werden.
Zum Vermeiden von Signalstörungen im Videosignalteil wird der Audiomodulator außerhalb des Zeitfensters abgeschaltet (Start-Stop-Generator).
Infolge der Beschaffenheit des Summensignal-Spektrums während der horizontalen Austastung, können auch entsprechend einer anderen Ausführungsform der Erfindung in einem kombinierten Frequenzmultiplex- und Zeitmultiplex- Verfahren mehrere Audiosignalträger zur Übertragung der Abtastwerte benutzt werden.
So ist es beispielsweise möglich, die Signalkomponenten eines Stereosignals mit der dreifachen Zeilenfrequenz (46 875 kHz) abzutasten und diese Werte jeweils als drei aufeinanderfolgende Schwingungspakete von je etwa 4 µs Dauer auf zwei getrennte Audioträger zu übertragen. Damit ist eine durchgehend parallele Signalverarbeitung für verschiedene Audiosignale und eine Vereinfachung der Zeitsteuerung möglich.
Die Beschaffenheit des Spektrums ermöglicht es auch, nur das Frequenzmultiplex-Verfahren mit weiteren Trägerfrequenzen zu nutzen. In diesem Fall werden alle Abtastwerte mittels verschiedener Modulatoren gleichzeitig auf gesonderte Träger moduliert.
In diesem Fall erzeugt jeder der Modulatoren innerhalb eines Zeitfensters nur jeweils ein Schwingungspaket.
Auf diese Weise kann günstig die Länge und die Lage des Zeitfensters innerhalb der horizontalen Austastung verändert werden.
Die Wahl der Trägerfrequenzen erfolgt so, daß das sichere Erkennen des Beginns des Synchronisations-Impulses und der Schwarzschulter gesichert ist. Diese sind weit weniger störungsanfällig als andere Videosignal-Komponenten.

Zur Unterdrückung von Störungen des Audiosignalträgers durch Signalreste aus den benachbarten Schrägspuren kann in bekannter Weise durch entsprechende Wahl der Lage der Träger die Azimutwinkeldämpfung genutzt werden.
Die Störsignaldämpfung aus den Nachbarspuren kann auch beträchtlich erhöht werden, indem wie bereits bekannt nach jedem Halbbild ein Wechsel zwischen zwei Audiosignalträgerfrequenzen vorgenommen wird.
Ein beachtlicher Vorteil der Erfindung besteht darin. daß das bzw. die Audioträgersignal(e) von den selben Einrichtungen aufgezeichnet und abgetastet wird bzw. werden, die in herkömmlichen Recordern bereits vorhanden sind.

Bei der Wiedergabe kann das verstärkte Summensignal ohne zusätzliche Selektionsmittel in bekannter Weise dem Videosignalteil zugeführt werden, in denen unter anderem auch das horizontale Austast- und Synchronsignale rückgewonnen wird. Dieses wird als zeitlicher Bezugswert für Steuerung des Audio- Wiedergabeteils benötigt.
Da auch während der horizontalen Austastung im Summensignal ein Signalgemisch vorliegt, ist es notwendig, im Audiowiedergabeteil das Summensignal mit Hilfe eines Filters vom modulierten Bildträgersignal zu befreien. Dazu reicht im einfachsten Fall ein Tiefpaß, der den Hubbereich des Bildträgers sperrt.
Das gefilterte, modulierte Audioträgersignal bzw. die Audioträgersignale werden einer Demodulationseinrichtung zugeführt.
Um Beeinflussungen dieser Einrichtung durch das modulierte Bildträgersignal zu vermeiden, ist diese für die Zeit außerhalb der Zeitfenster abgeschaltet oder in einen definierten Zustand versetzt.
Am Ausgang der Demodulationseinrichtung entsteht eine Signalspannungsfolge, die in Amplitude, Polarität und zeitlicher Lage den Abtastwerten am Eingang des Modulators während der Aufnahme entspricht.
Diese Spannungswerte werden mit an sich bekannten Einrichtungen zwischengespeichert und in eine Treppenspannung umgewandelt.
Aus dieser wird mit Hilfe bekannter Filtereinrichtungen die ursprüngliche Audiodarbietung zurückgewonnen.

Die Erfindung soll nachstehend anhand eines vorteilhaften Ausführungsbeispiels näher erläutert werden.In den zugehörigen Zeichnungen zeigen:
- Figur 1: ein Blockschaltbild für den erfindungsgemäßen Audiosignal-Aufzeichnungsteil eines Recorders,
- Figur 2: eine Darstellung der zeitlichen Folge der Signalaufbereitung im Aufzeichnungsteil,
- Figur 3: ein Blockschaltbild für den erfindungsgemäßen Audiosignal-Wiedergabeteil eines Recorders,
- Figur 4: eine Darstellung des zeitlichen Ablaufs der Audiosignalrückgewinnung,

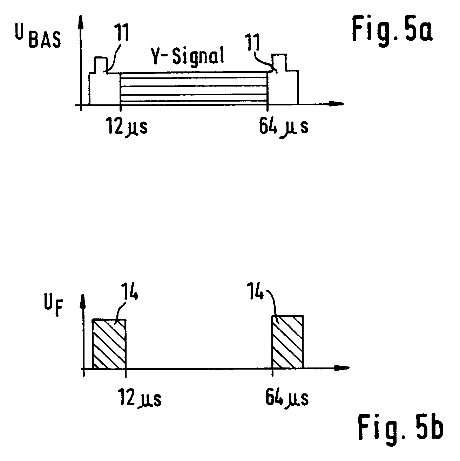

- Figur 5: eine Darstellung der horizontalen Austastung und des Zeitfensters.

In der dargestellten Ausführungsform werden zwei Audiosignale mit einer oberen Grenzfrequenz bis zu 14 kHz übertragen. Diese werden jeweils mit der doppelten Zeilen-Frequenz (f_{H} = 15 625 Hz) abgetastet und mit Hilfe eines Audioträgersignals aufgezeichnet.

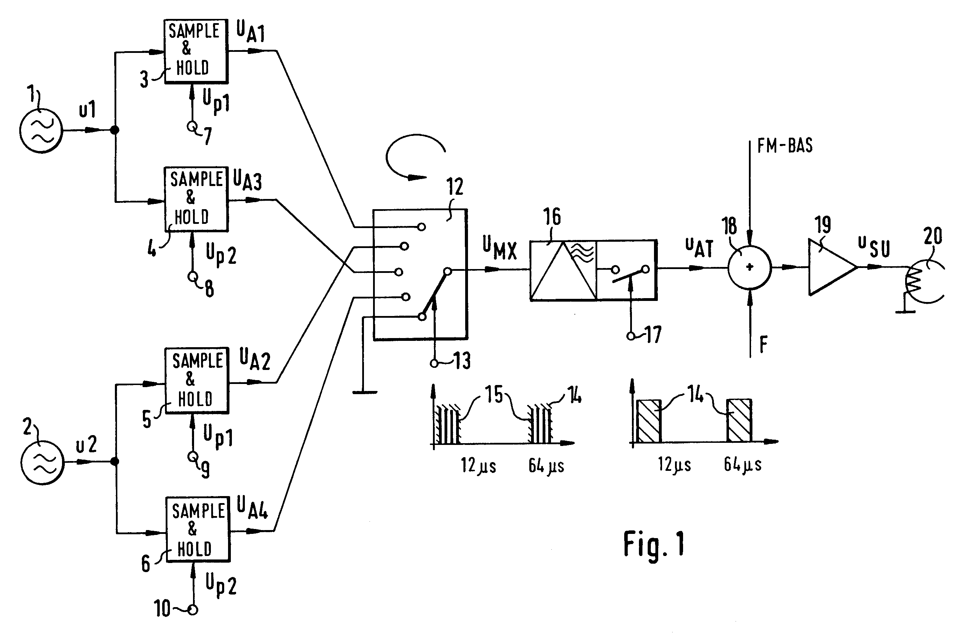

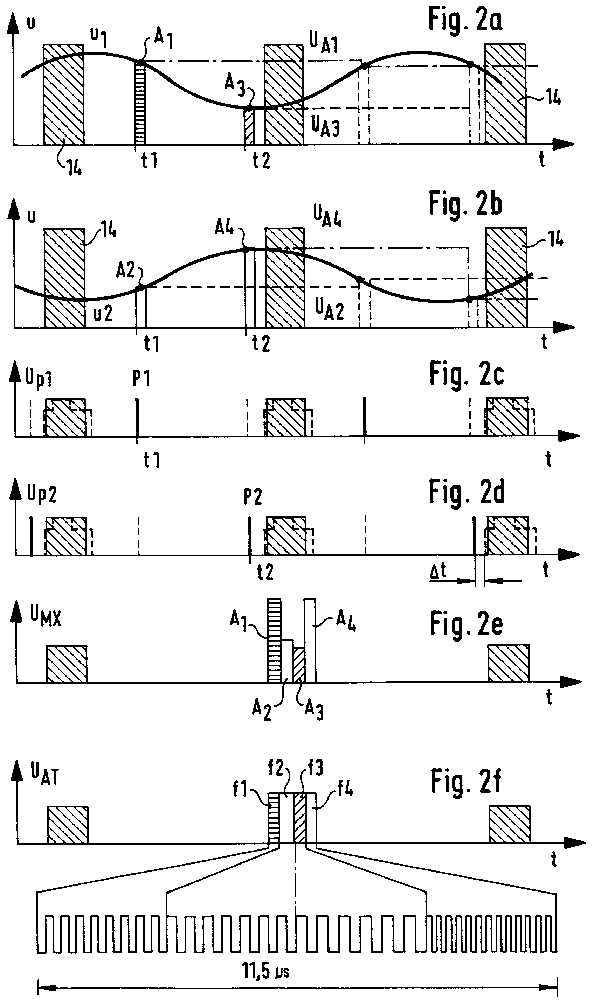

In Fig. 1 ist das Blockschaltbild für die Audiosignal-Aufbereitung beim Aufzeichnen dargestellt. Die Fig. 2 zeigt in den Diagrammen 2 a) bis 2 f) den zeitlichen Verlauf der Signal- und Steuerspannungen an den Baugruppen, die in Fig. 1 dargestellt sind.

Die Audiosignalquellen 1 und 2 liefern jeweils die Audiosignale u1 und u2, die sowohl die Seiteninformationen eines Stereosignals als auch separate Audiosignale wie z.B. die eines zweisprachigen Begleittons beinhalten können.
Zu diesem Zweck ist das Audiosignal u1 jeweils mit den Signaleingängen der Abtast- und Halteeinrichtungen 3 und 4 und das Audiosignal u2 mit den Signaleingängen der Abtast- und Halteeinrichtungen 5 und 6 parallel verbunden.
Den Abtast- und Halteeinrichtungen 3 und 5 werden an den Steuereingängen 7 und 9 die Abtastimpulse P1 (Fig. 2 c) und den Abtast- und Halteeinrichtungen 4 und 6 an den Steuereingängen 8 und 10 die Abtastimpulse P2 (Fig 2 d) zugeführt.
Die Abtastimpulse P1 und P2 werden aus dem horizontalen Austast- und Synchronsignal erzeugt.
Um die geforderte Abtastpulsfrequenz (f_{P}= 2f_{H}= 31250 Hz) zu erhalten, sind die Abtastimpulse P1 gegenüber den Abtastimpulse P2 um eine halbe Zeilendauer versetzt angeordnet. Bei einer Zeilendauer von T = 64 µs werden die Audiosignale u1 und u2 somit jeweils nach 32 µs abgetastet. Die Abtastimpulse P1 und P2 werden in ihrer Phasenlage zum horizontales Austast- und Synchronsignal so aufbereitet, daß die Abtastwerte A1 bis A4 vor dem Beginn der vorderen Schwarzschulter der horizontalen Austastung 11 gewonnen werden. Dazu liegt die Abtastpulsfrequenz in der Phasenlage um eine Zeitdifferenz / t vor dem Beginn der horizontalen Austastung 11 (Fig. 2 d).
Während der horizontalen Austastung 11 liegen somit die Spannungen U_{A1} bis U_{A4} der Abtastwerte A1 bis A4 von den Audiosignalen u1 und u2 parallel an den entsprechenden Signaleingängen einer Zeitmultiplex-Einrichtung 12.
Diese erhält über einen Steuereingang 13 innerhalb von Zeitfenstern 14 jeweils eine Impulsfolge 15 von vier Steuerimpulsen, mit deren Hilfe die Spannungen U_{A1} bis U_{A4} seriell zu gleichen Zeitlängen (unter 3 µs) an den Signaleingang eines Modulators 16 gelangen (Fig. 2 e). Der Modulator 16 erzeugt nach dem Prinzip des Start-Stop-Generators in jedem Zeitfenster 14, das über ein Steuersignal am Steuereingang 17 erzeugt wird, nacheinander vier Schwingungspakete (Fig. 2 f).
Im Beispiel sind es Rechteckwellen mit den Frequenzen f1 bis f4 , die die Abtastwerte A1 bis A4 entsprechend kennzeichnen.
In alternativen Ausführungsformen der Erfindung können jedoch auch vier Schwingungspakete gleicher Frequenz erzeugt werden, bei denen die Amplituden der Abtastwerte durch entsprechende Phasenlage, Tastverhältnisse oder Pulsabstände gekennzeichnet sind.
Das modulierte Audioträgersignal u_{AT} wird am Summenpunkt 18 zum Bildträgersignal FM-BAS und in der Frequenzlage umgesetzten Farbartsignal addiert und über einen Aufnahmeverstärker 19, der im Videorecorder zur Videoaufzeichnung bereits vorhandenen ist und der auch die Kopfumschaltung realisiert, den Videoköpfen 20 zugeführt.

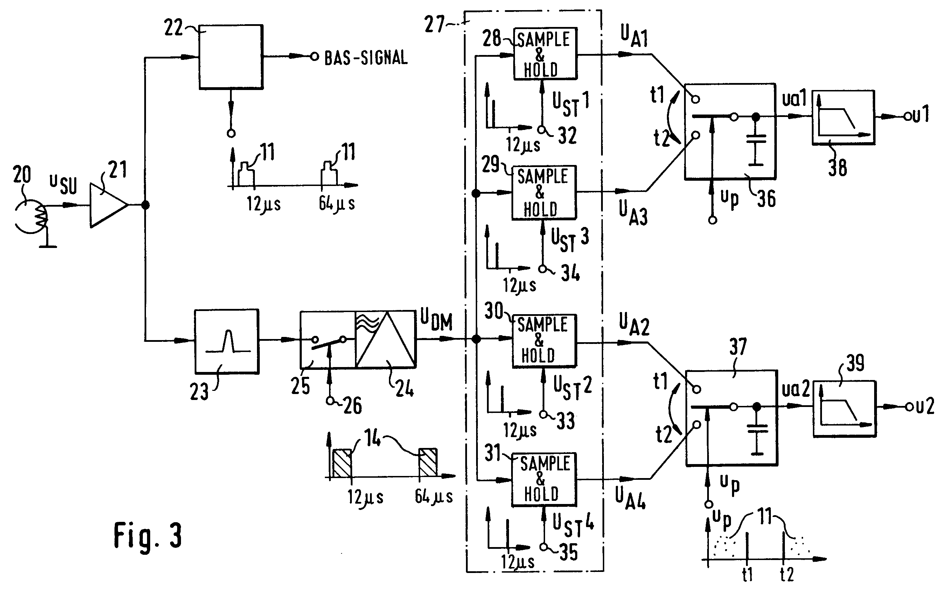

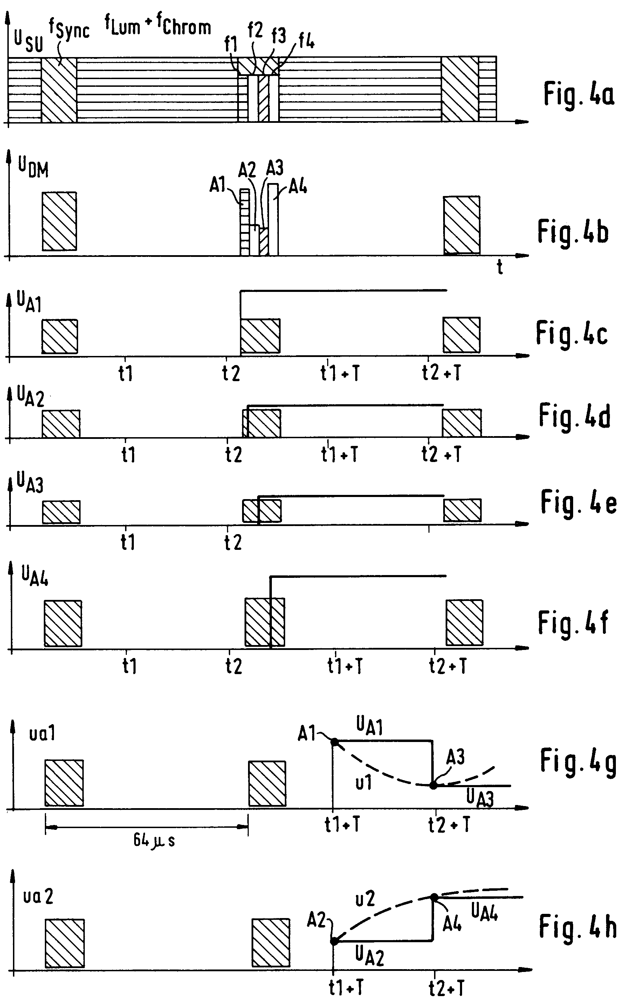

In der Fig. 3 wird die Einrichtung zur Wiedergabe der Audiosignale dargestellt. Die Fig. 4 zeigt in den Diagrammen 4 a) bis 4 h) den zeitlichen Verlauf der entsprechenden Signal- und Steuerspannungen an den Baugruppen von Fig. 3.

Das Summensignal u_{SU} Fig 4a) wird von den Videoköpfen 20 vom Magnetband abgetastet und mit Hilfe eines Wiedergabeverstärkers 21, der ebenfalls in herkömmlichen Recordern bereits vorhanden ist und gleichzeitig die Kopfumschaltung realisiert, verstärkt.
Das verstärkte Summensignal wird in bekannter Weise dem Videosignalteil 22 zum Rückgewinnen des Luminanz- bzw. Chrominanzsignals zugeführt. Dabei wird unter anderem auch das horizontale Austast- und Synchronsignal 11 zurückgewonnen.
Im Audiowiedergabeteil wird das Summensignal u_{SU} mit Hilfe eines Filters 23 vom Bildträgersignal befreit und einem Audiodemodulator 24 zugeführt.
Der Audiodemodulator 24 wird mit einer Steuereinrichtung 25 an einem Steuereingang 26 für die Zeit außerhalb der Zeitfenster 14 stummgetastet.
Am Ausgang des Audiodemodulators 24 entsteht eine Folge von AM-Pulsen Fig 4 b), die in Ihrer Amplitude, Polarität und zeitlichen Lage zu einander den Abtastwerten A1 - A4 am Ausgang der Zeitmultiplex- Einrichtung 12 während der Aufnahme entsprechen.
Mit Hilfe einer zweiten Zeitmultiplex-Einrichtung 27, die beispielsweise von den Abtast- und Halteeinrichtungen 28 - 31 gebildet wird, werden die vier Spannungswerte U_{A}1 bis U_{A}4 der Signalspannungsfolge bis zum Umwandeln in eine Treppenspannung parallel gehalten. Zu diesem Zweck erhalten die Abtast- und Halteeinrichtungen 28 - 31 an ihren Steuereingängen 32 - 35 jeweils entsprechende Steuerspannungsimpulse U_{ST}1 bis U_{ST} 4.
Mit Hilfe der elektronischen Torschaltungen 36 und 37 werden die Spannungen U_{A}1 und U_{A}3 bzw. U_{A}2 und U_{A}4 in die Treppenspannungen ua 1 bzw ua 2 umgewandelt. Aus diesen werden mit Hilfe der NF-Tiefpässe 38 und 39 die ursprünglichen Audiosignale u1 und u2 zurückgewonnen.

## Patentansprüche

1. Videorecorder mit verbesserter Aufzeichnung und Wiedergabe von Audiosignalen bei dem Einrichtungen zum Modulieren und Demodulieren von Audiosignalen und Videoköpfe zum Aufzeichnen und Abtasten eines Summensignals vorhanden sind, wobei das Summensignal:
- ein mit dem BAS-Signal frequenzmoduliertes Bildträgersignal
- ein Farbartsignal, welches spektral unterhalb des modulierten Bildträgersignals liegt und
- mindestens ein moduliertes Audioträgersignal, dessen Frequenzbereich sich außerhalb des Hubbereichs des modulierten Bildträgersignals befindet,
enthält, **gekennzeichnet dadurch**, daß das Audioträgersignal (u_{AT})
- aus Schwingungspaketen (Burst) besteht, welche jeweils mit einem durch Puls-Amplituden-Tastung erhaltenen Spannungswert (An) eines Audiosignals moduliert sind
- und im Summensignal diskontinuierlich, zeitlich begrenzt durch die Dauer von Zeitfenstern (14), die jeweils innerhalb der horizontalen Austastung (11) liegen, vorhanden ist
- und daß das Audioträgersignal (u_{AT}) innerhalb der Zeitfenster (14) aus verschiedenen Schwingungspaketen besteht, welche die Modulation verschiedener Abtastwerte (A1 - An) von Audiosignalen enthalten.

2. Videorecorder nach Anspruch 1, dadurch gekennzeichnet, daß beim Aufzeichnen jedes Audiosignal während der Dauer einer Zeile durch Abtastimpulse (P1 - Pn) mehrfach abgetastet wird und die Pulsamplituden Halteeinrichtungen (3 - 6) zugeführt werden.

3. Videorecorder nach Anspruch 1, dadurch gekennzeichnet, daß im Wiedergabebetrieb Einrichtungen zum
- Selektieren (23, 25) des modulierten Audioträgersignals (u_{AT}) aus dem Summensignal
- zeit-selektiven Demodulieren (24, 25) der Schwingungspakete während der Zeitfenster (14)
- Halten (28 - 31) der demodulierten Abtastwerte (U_{A1}- U_{An})
- Umwandeln (36, 37) der Abtastwerte (U_{A1} - U_{An}) in eine Treppenspannung und
- Reproduzieren (38, 39) der ursprünglichen Audiodarbietung aus der Treppenspannung
vorhanden sind.

4. Videorecorder nach den Ansprüchen 1 bis 3, dadurch gekennzeichnet, daß die Abtastimpulse (P1 - Pn) zur Audiosignal-Abtastung und die Steuersignale für die Einrichtungen zur sequentiellen Signalaufbereitung beim Aufnehmen und Wiedergeben frequenz- und phasenstarr mit dem horizontalen Austast- und Synchronsignal verknüpft sind und daß das modulierte Audioträgersignal (u_{AT}), puls-frequenz-modulierte puls-dauer-modulierte oder puls-phasen-modulierte Schwingungspakete sind.

5. Videorecorder nach den Ansprüchen 1 bis 4, dadurch gekennzeichnet, daß das Audioträgersignal (u_{AT}) innerhalb der Zeitfenster (14) aus Serien von Schwingungspaketen besteht, welche nacheinander die Modulation verschiedener Abtastwerte (A1 - An) von Audiosignalen enthalten und, daß der Ausgang der Einrichtung zum zeitselektiven Demodulieren (24, 25) der Schwingungspakete über eine Zeitmultiplex-Einrichtung (27) mit parallel geschalteten Halteeinrichtungen (28 bis 31) verbunden ist.

6. Videorecorder nach Anspruch 1, dadurch gekennzeichnet, daß sich die Abtastwerte (A1 -An) der Audiosignale (u1 und u2) als jeweils ein Schwingungspaket oder als Serie von Schwingungspaketen parallel auf verschiedenen Audioträgern befinden.

7. Videorecorder nach den Ansprüchen 1, 4 oder 6, dadurch gekennzeichnet, daß die Abtast- und Halteeinrichtungen (3 - 6) verschiedener Audiosignale beim Aufzeichnen zeitgleich (parallel) betrieben werden.

8. Videorecorder nach Anspruch 1, dadurch gekennzeichnet, daß das Audioträgersignal u_{AT} innerhalb eines Zeitfensters (14) aus einem Schwingungspaket besteht, welches jeweils mit einem Abtastwert eines Mono-Audiosignal moduliert ist, das während der Dauer einer Zeile einmal abgetastet wird.

9. Videorecorder nach den Ansprüchen 1, 4 oder 6 dadurch gekennzeichnet, daß die Frequenz des Audioträgersignals u_{AT} zwischen aufeinanderfolgenden Halbbildern jeweils zwischen einem ersten und einem zweiten Wert wechselt.

10. Videorecorder nach den Ansprüchen 1, 4 oder 6 dadurch gekennzeichnet, daß beim Aufnehmen jedes Audiosignal direkt und über mindestens eine Verzögerungseinrichtung parallel-betriebenen Abtast- und Halteeinrichtungen zugeführt wird.
